# EUROPEAN PATENT APPLICATION

(11) **EP 2 930 594 A1**
(43) Date of publication of application: **14.10.2015**
(21) Application number: 13860662.9
(22) Date of filing: 25.10.2013
(51) Int. Cl.: G06F 3/041

(54) **DISPLAY DEVICE**

(30) Priority: 06.12.2012 JP 2012267236
(71) Applicant: Nippon Electric Glass Co., Ltd., Otsu-shi, Shiga 520-8639 (JP)
(72) Inventor: TAKEUCHI, Hirokazu, Otsu-shi Shiga 520-8639 (JP); YASUDA, Hiroyuki, Otsu-shi Shiga 520-8639 (JP); NANBA, Kengo, Otsu-shi Shiga 520-8639 (JP); TANAKA, Hirotsugu, Otsu-shi Shiga 520-8639 (JP)
(74) Representative: Tetzner, Michael
(86) International application number: PCT/JP2013/079000
(87) International publication number: WO 2014/087758

(57) **Abstract**

Provided is a display device that allows a user to perform a variety of input operations. The display device (1) includes a device body (20) and a cover glass (10) . The device body (20) includes a principal surface (21), a first side surface (22), and a second side surface (23). The cover glass (10) includes a front portion (11) and a first side portion (12). The front portion (11) covers the principal surface (12). The first side portion (12) covers the first side surface (22). The device body (20) further includes a display portion (21a) and a second touch sensor surface (22a). The display portion (21a) is provided on the principal surface (21). The display portion (21a) forms a first touch sensor surface. The second touch sensor surface (22a) is provided on the first side surface (22). At least an outside surface of a junction of the first side portion (12) with the front portion (11) is formed of a curved surface.

## Description

### [Technical Field]

This invention relates to display devices.

### [Background Art]

Touch sensor-equipped display devices have recently been proposed as display devices through which a user can easily perform a variety of input operations. For example, Patent Literature 1 describes a rectangular plate-shaped display device which includes a display screen on a principal surface thereof and touch sensors on a plurality of side surfaces thereof. In the display device described in Patent Literature 1, a specified input is carried out when an operator's finger moves on the touch sensor on each side surface and along the length direction or the width direction.

### [Citation List]

### [Patent Literature]

[PTL 1]
WO2010/007813A1

### [Summary of Invention]

### [Technical Problem]

There have recently been increasing demands for a display device that allows a user to perform a wider variety of input operations.

A principal object of the present invention is to provide a display device that allows a user to perform a variety of input operations.

### [Solution to Problem]

A display device according to the present invention includes a device body and a cover glass. The device body includes a principal surface, a first side surface, and a second side surface. The principal surface extends along first and second directions perpendicular to each other. The first side surface is located on one side of the principal surface in the first direction. The second side surface is located on the other side of the principal surface in the first direction. The cover glass includes a front portion and a first side portion. The front portion covers the principal surface. The first side portion covers the first side surface. The device body further includes a display portion and a second touch sensor surface. The display portion is provided on the principal surface. The display portion forms a first touch sensor surface. The second touch sensor surface is provided on the first side surface. At least an outside surface of a junction of the first side portion with the front portion is formed of a curved surface.

The display device according to the present invention may allow a first operation to be input when an object moves from on the front portion to on the first side portion or from on the first side portion to on the front portion while touching the cover glass.

The display device according to the present invention may allow a second operation to be input when an object moves on the first side portion along the second direction while touching the cover glass.

The display device according to the present invention may allow a third operation to be input when an object touches one region of the first side portion.

The first touch sensor surface and the second touch sensor surface may be continuously provided.

A magnitude of an angle formed by the front portion and the first side portion may be 90° or more.

The cover glass is preferably fixed at the front portion to the device body.

The display portion may include a plurality of display regions provided along the second direction. In this case, each of the plurality of display regions is preferably operable by allowing an object to touch a region of the first side portion located on one side of the display region in the first direction.

The device body may further include a third touch sensor surface located on the second side surface. In this case, the cover glass preferably further includes a second side portion covering the second surface. At least an outside surface of a junction of the second side portion with the front portion is preferably formed of a curved surface.

The display device according to the present invention is preferably a mobile display device.

### [Advantageous Effects of Invention]

The present invention can provide a display device that allows a user to perform a variety of input operations.

### [Brief Description of Drawings]

[Fig. 1]

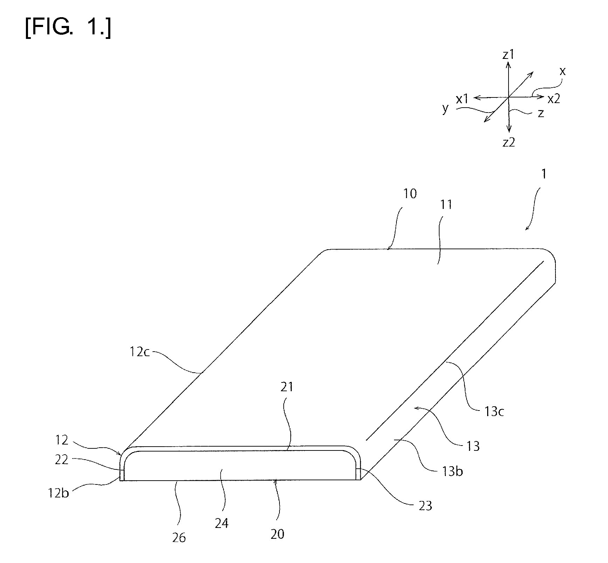

   Fig. 1 is a schematic perspective view of a display device according to one embodiment of the present invention.
[Fig. 2]

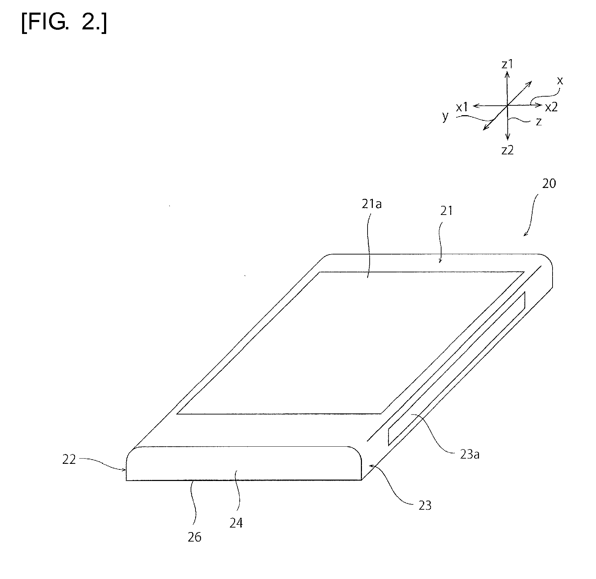

   Fig. 2 is a schematic perspective view of a device body in the one embodiment of the present invention.
[Fig. 3]

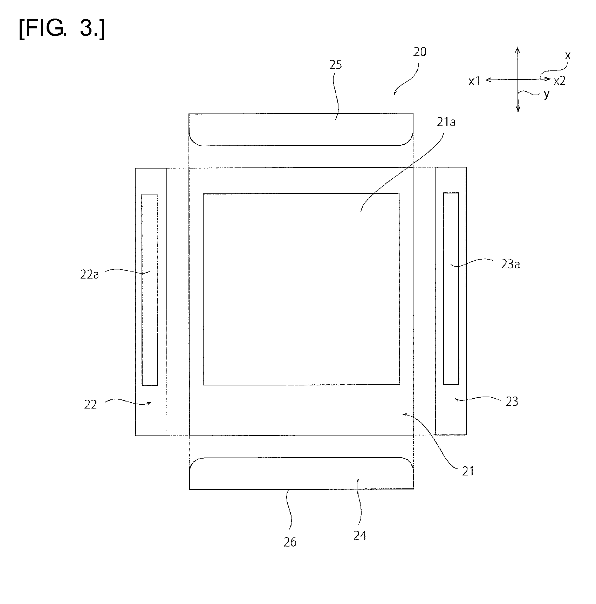

   Fig. 3 is a schematic development view of the device body in the one embodiment of the present invention.
[Fig. 4]

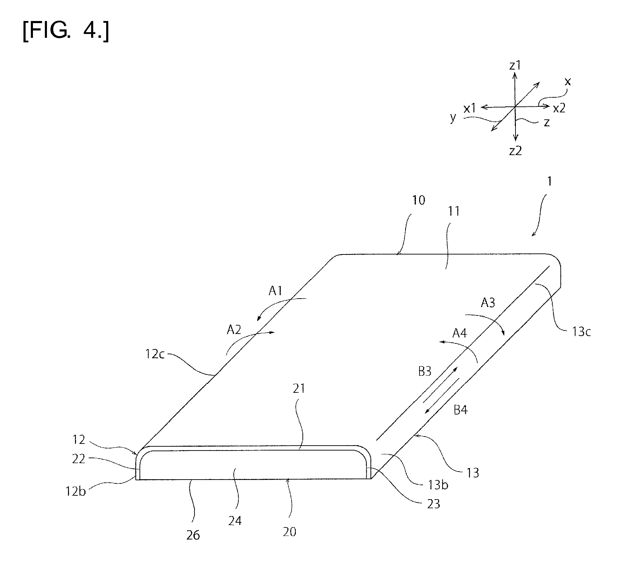

   Fig. 4 is a schematic perspective view for illustrating operations for the display device in the one embodiment of the present invention.
[Fig. 5]

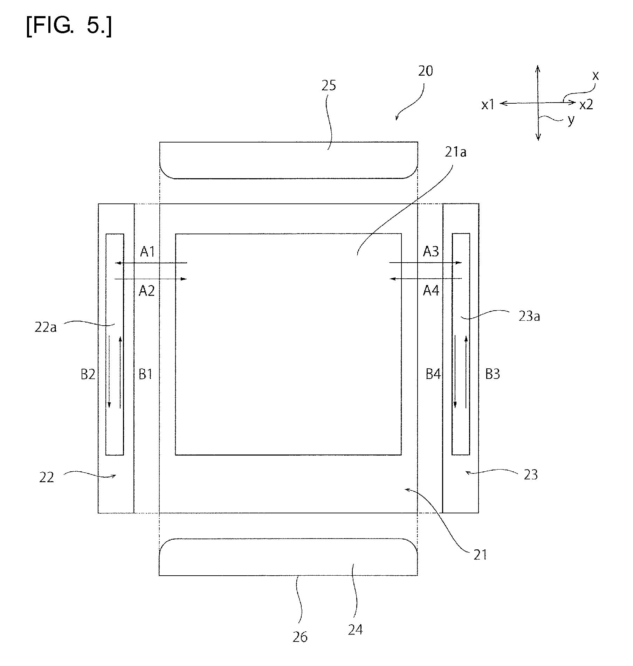

   Fig. 5 is a schematic development view of the device body for illustrating the operations for the display device in the one embodiment of the present invention.
[Fig. 6]

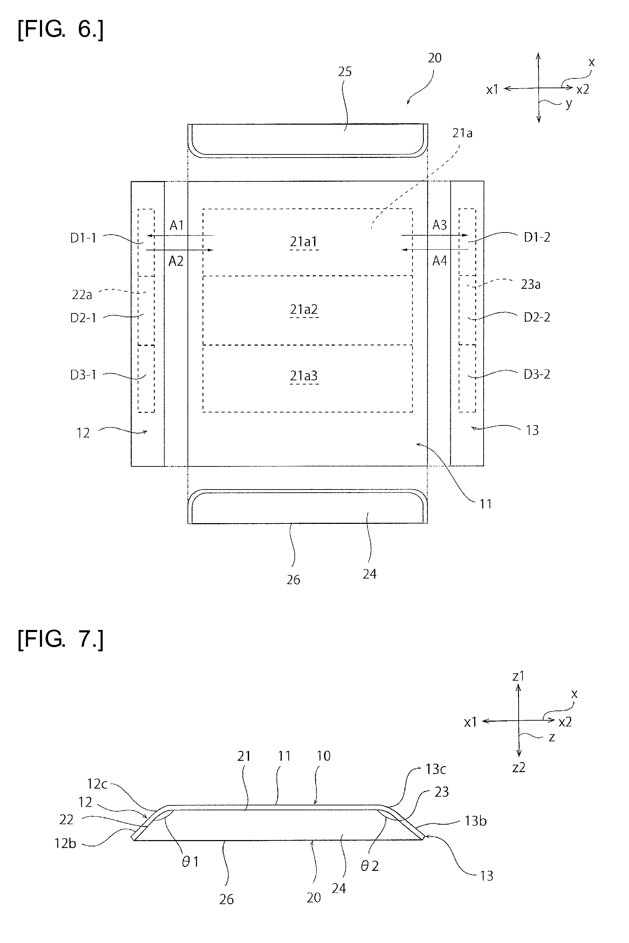

   Fig. 6 is a schematic development view for illustrating an example of a display mode of the display device in the one embodiment of the present invention.
[Fig. 7]
   Fig. 7 is a schematic side view of a display device according to a first modification.
[Fig. 8]

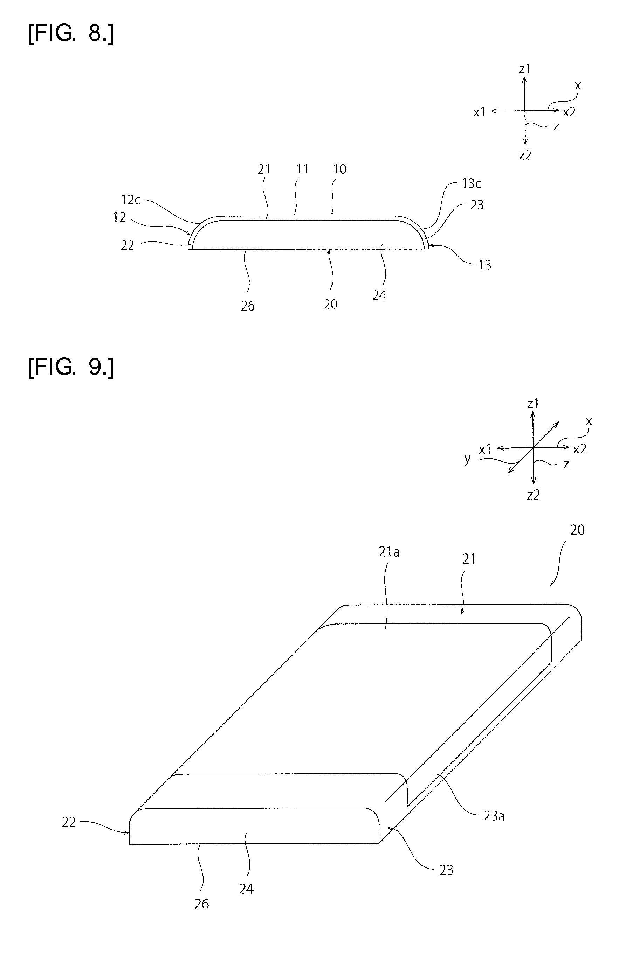

   Fig. 8 is a schematic side view of a display device according to a second modification.
[Fig. 9]
   Fig. 9 is a schematic perspective view of a device body in a third modification.

### [Description of Embodiments]

Hereinafter, a description will be given of an exemplary preferred embodiment for working of the present invention. However, the following embodiment is merely illustrative. The present invention is not at all limited to the following embodiment.

Throughout the drawings to which the embodiment and the like refer, elements having substantially the same functions will be referred to by the same reference signs. The drawings to which the embodiment and the like refer are schematically illustrated. The dimensional ratios and the like of objects illustrated in the drawings may be different from those of the actual objects. Different drawings may have different dimensional ratios and the like of the objects. Dimensional ratios and the like of specific objects should be determined in consideration of the following descriptions.

Fig. 1 is a schematic perspective view of a display device 1 according to this embodiment. The display device 1 may be, for example, a stationary display device but is preferably a mobile display device, such as a cellular phone, a smartphone, a tablet personal computer (tablet PC) or a notebook personal computer.

The display device 1 includes a device body 20 and a cover glass 10.

As shown in Figs. 2 and 3, the device body 20 is provided in a plate-like shape. The device body 20 includes a first principal surface 21, a second principal surface 26, and first to fourth side surfaces 22 to 25. The first and second principal surfaces 21, 26 extend along the x-axis direction and y-axis direction perpendicular to each other. The first and second principal surfaces 21, 26 are each substantially flat. The first principal surface 21 and the second principal surface 26 are opposite to each other in the z-axis direction perpendicular to the x-axis direction and y-axis direction.

The first side surface 22 is located on x1 sides of the principal surfaces 21, 26 in the x-axis direction. The first side surface 22 connects the first principal surface 21 and the second principal surface 26. The second side surface 23 is located on x2 sides of the principal surfaces 21, 26 in the x-axis direction. The second side surface 23 connects the first principal surface 21 and the second principal surface 26. While the third side surface 24 is located on one sides of the principal surfaces 21, 26 in the y-axis direction, the fourth side surface 25 is located on the other sides of the principal surfaces 21, 26 in the y-axis direction. The third and fourth side surfaces 24, 25 each connect the first principal surface 21 and the second principal surface 26.

A display portion 21a configured to display characters and images thereon is provided on the first principal surface 21. The display portion 21a forms a first touch sensor surface. The term "touch sensor surface" herein refers to a surface where a touch thereof by an object, such as an operator's finger or a stylus pen, is to be detected. The touch sensor surface may be a capacitance touch sensor surface, pressure-sensitive touch sensor surface, optical touch sensor surface, or other types of touch sensor surfaces.

As shown in Fig. 3, the first side surface 22 is provided with a second touch sensor surface 22a. The second touch sensor surface 22a has an elongated shape whose longitudinal direction extends along the y-axis direction. Specifically, the second touch sensor surface 22a is provided in a rectangular shape whose longitudinal direction extends along the y-axis direction. The outside surface of a junction of the first side surface 22 with the first principal surface 21 is formed of a curved surface and the outside surface of the other portion thereof is formed of a flat surface. In other words, a ridge formed by the first side surface 22 and the first principal surface 21 has a rounded shape.

The second side surface 23 is provided with a third touch sensor surface 23a. The third touch sensor surface 23a has an elongated shape whose longitudinal direction extends along the y-axis direction. Specifically, the third touch sensor surface 23a is provided in a rectangular shape whose longitudinal direction extends along the y-axis direction. The outside surface of a junction of the second side surface 23 with the first principal surface 21 is formed of a curved surface and the outside surface of the other portion thereof is formed of a flat surface. In other words, a ridge formed by the second side surface 23 and the first principal surface 21 has a rounded shape.

Although in this embodiment the third and fourth side surfaces 24, 25 are provided with no touch sensor surface, the third and fourth side surfaces may also be provided with touch sensor surfaces.

As shown in Fig. 1, the first principal surface 21 and the first and second side surfaces 22, 23 of the device body 20 are covered with a cover glass 10. The cover glass 10 includes a front portion 11, a first side portion 12, and a second side portion 13. The front portion 11, the first side portion 12, and the second side portion 13 are integrally provided. In other words, the cover glass 10 is formed of a single glass sheet.

The front portion 11 covers at least a region of the first principal surface 21 provided with the display portion 21a. Specifically, in this embodiment, the front portion 11 covers substantially the whole of the first principal surface 21. The front portion 11 is provided in a substantially flat sheet-like shape. The flat shape of the front portion 11 is a rectangular shape whose short side is parallel to the x-axis direction and whose long side is parallel to the y-axis direction.

An x1-side end of the front portion 11 in the x-axis direction is connected to the first side portion 12. The first side portion 12 covers at least a portion of the first side surface 22 of the device body 20. Specifically, in this embodiment, the first side portion 12 covers substantially the whole of the first side surface 22. The first side portion 12 includes a bent portion 12c and a flat portion 12b. The bent portion 12c is formed of a junction of the first side portion 12 with the front portion 11. The outside surface of the bent portion 12c (the surface thereof opposite to the device body 20) is formed of a curved surface. Specifically, in this embodiment, each of the outside surface and inside surface of the bent portion 12c is formed of a curved surface. However, the inside surface of the bent portion 12c may be formed of at least one flat surface.

The flat portion 12b is continued to the bent portion 12c. The flat portion 12b reaches a z2-side end of the first side surface 22 in the z direction.

An x2-side end of the front portion 11 in the x-axis direction is connected to the second side portion 13. The second side portion 13 covers at least a portion of the second side surface 23 of the device body 20. Specifically, in this embodiment, the second side portion 13 covers substantially the whole of the second side surface 23. The second side portion 13 includes a bent portion 13c and a flat portion 13b. The bent portion 13c is formed of a junction of the second side portion 13 with the front portion 11. The outside surface of the bent portion 13c (the surface thereof opposite to the device body 20) is formed of a curved surface. Specifically, in this embodiment, each of the outside surface and inside surface of the bent portion 13c is formed of a curved surface. However, the inside surface of the bent portion 13c may be formed of at least one flat surface.

In this embodiment, the cover glass 10 is fixed at the front portion 11 to the device body 20 but not fixed at the first and second side portions 12, 13 directly to the device body 20. However, the cover glass 10 may be fixed not only at the front portion 11 but also at the side portions 12, 13 directly to the device body 20. The fixation of the front portion 11 to the device body 20 can be implemented, for example, using an adhesive or the like.

Next, a description will be given of operations for the display device 1. The display device 1 is not only operable with a touch of the display portion 21a forming the first touch sensor surface but also operable with touches of the second and third touch sensor surfaces 22a, 23a.

### (First Operation)

For example, when, as in the arrow A1 or A2 shown in Figs. 4 and 5, an object (such as an operator's finger or a stylus pen) moves from on the front portion 11 to on the first side portion 12 or from on the first side portion 12 to on the front portion 11 while touching the cover glass 10, the 1-1 operation is input.

Likewise, when, as in the arrow A3 or A4, an object moves from on the front portion 11 to on the second side portion 13 or from on the second side portion 13 to on the front portion 11 while touching the cover glass 10, the 1-2 operation is input.

### (Second Operation)

For example, when, as in the arrow B1 or B2 shown in Fig 5, an object moves on the first side portion 12 along the y-axis direction while touching the cover glass 10, the 2-1 operation is input. When an object moves as in the arrow B1 and another object moves as in the arrow B2, the 2-2 operation is input.

Likewise, when, as in the arrow B3 or B4, an object moves on the second side portion 13 along the y-axis direction while touching the cover glass 10, the 2-3 operation is input. When an object moves as in the arrow B3 and another object moves as in the arrow B4, the 2-4 operation is input.

### (Third Operation)

When an object touches one region of the first side portion 12, the 3-1 operation is input.

Likewise, when an object touches one region of the second side portion 13, the 3-2 operation is input.

The 1-1, 1-2, 2-1 to 2-4, 3-1, and 3-2 operations may be operations of the same type or operations of different types. For example, the 1-1 and 1-2 operations may be scrolls in the x-axis direction of images displayed on the display portion 21a. For example, the 2-1 and 2-3 operations may be scrolls in the y-axis direction of images displayed on the display portion 21a. For example, the 2-2 and 2-4 operations may be magnification changes (enlargement or reduction) of images displayed on the display portion 21a. For example, the 3-1 and 3-2 operations may be switchings between screens displayed on the display portion 21a.

Generally, in display devices, side portions are provided in a flat sheet-like shape. Furthermore, because display devices are strongly desired to be reduced in thickness, their side portions are narrow. Therefore, in general display devices, even if a touch sensor surface is provided on their side surface, operations broadly of two types only can be performed, including those for moving an object along the length direction or width direction and those for allowing an object to touch one region. It is difficult to perform an operation for moving an object on the narrow side portion along the thickness direction.

In contrast to the above, in the display device 1, at least the outside surface of the bent portion 12c, which is a junction of the first side portion 12 with the front portion 11, is formed of a curved surface. Therefore, an object can be moved smoothly from on the front portion 11 to on the first side portion 12, so that an operation for moving the object as in the arrows A1 and A2 can be performed. In other words, in the display device 1, not only the second and third operations but also the 1-1 operation can be performed. Hence, the user of the display device 1 can perform a variety of input operations of three or more types on the display device 1.

Furthermore, in the display device 1, at least the outside surface of the bent portion 13c, which is a junction of the second side portion 13 with the front portion 11, is formed of a curved surface. Therefore, an operation for moving an object as in the arrows A3 and A4 can be performed. Thus, the 1-2 operation can also be performed. Hence, the user of the display device 1 can perform a wider variety of input operations on the display device 1.

Moreover, in operating the side portions 12 and 13, an image displayed on the display portion 21a is less likely to be hidden by an object. Therefore, if as in the display device 1 the input operations on the side portions 12, 13 are diversified, various operations can be performed while an image displayed on the display portion 21a is made visible.

Furthermore, as compared with the case where the side portions are in a flat-sheet like shape, the surfaces of the side portions 12, 13 have a greater widthwise dimension along the x-axis direction and the side portions 12, 13 have a larger area. Therefore, an object can be easily moved along the arrows A1 to A4 and B1 to B4. Hence, the display device 1 is easy to operate.

As described previously, display devices are desired to be thin. Therefore, their side surfaces are narrow. It is difficult to fix individual glass sheets or resin sheets onto regions of the narrow side surfaces provided with their respective touch sensor surfaces. Furthermore, since the touch sensor surfaces are pressed by an object, such as a finger or a stylus pen, it is necessary to firmly fix the glass sheets or resin sheets to the touch sensor surfaces. Therefore, their respective fixtures are required to be strong. For this reason, the housing is likely to increase in size, which makes it difficult to reduce the display device in size and thickness. If the display device has a very small thickness, glass sheets or resin sheets may not be able to be fixed to the touch sensor surfaces.

In contrast to the above, in the display device 1, the front portion 11 and the side portions 12, 13 are integrally provided. Therefore, once the front portion 11 is fixed to the device body 20, it is not always necessary to fix the side portions 12, 13 directly to the device body 20. Hence, even if the side portions 12, 13 have a small dimension along the z-axis direction, the side portions 12, 13 can be firmly fixed to the device body 20. As a result, the display device 1 can be reduced in thickness and size.

Fig. 6 is a schematic plan view for illustrating an example of a display mode of the display device 1. As shown in Fig. 6, the display portion 21a includes a plurality of display regions 21a1 to 21a3 provided along the y-axis direction. These plurality of display regions 21a1 to 21a3 can display individual images from each other. Each of the plurality of display regions 21a1 to 21a3 is operable by allowing an object to touch a region of the side portion 12, 13 located on one or the other side of the display region 21a1 to 21a3 in the x-axis direction. Specifically, the display region 21a1 is operable by moving an object along any one of the arrows A1 to A4 across the display portion 21a and at least one of a region D1-1 of the side portion 12 located on the x1 side of the display region 21a1 in the x-axis direction and a region D1-2 of the side portion 13 located on the x2 side of the display region 21a1 in the x-axis direction. The display region 21a2 is operable by moving an object along any one of the arrows A1 to A4 across the display portion 21a and at least one of a region D2-1 of the side portion 12 located on the x1 side of the display region 21a2 in the x-axis direction and a region D2-2 of the side portion 13 located on the x2 side of the display region 21a2 in the x-axis direction. The display region 21a3 is operable by moving an object along any one of the arrows A1 to A4 across the display portion 21a and at least one of a region D3-1 of the side portion 12 located on the x1 side of the display region 21a3 in the x-axis direction and a region D3-2 of the side portion 13 located on the x2 side of the display region 21a3 in the x-axis direction.

Therefore, in the display device 1, the plurality of display regions are easily individually operable without being hidden by an object.

Although in this embodiment an example has been described where the magnitude θ1 of the angle formed by the front portion 11 and the first side portion 12 and the magnitude θ2 of the angle formed by the front portion 11 and the second side portion 13 are each approximately 90°, θ1 and θ2 may be larger than 90° as shown in Fig. 7. In this case, the operations along the arrows A1 to A4 can be more easily performed. From the viewpoint of making the operations along the arrows A1 to A4 easier, each of θ1 and θ2 is preferably not smaller than 90°, more preferably larger than 90°, and still more preferably not smaller than 100°. However, if θ1 and θ1 are too large, the display device 1 tends to increase in size. Therefore, each of θ1 and θ2 is preferably not larger than 175° and more preferably not larger than 170°.

In this embodiment, an example has been described where the side portions 12, 13 include not only the bent portions 12c, 13c but also the flat portions 12b, 13b. However, the present invention is not limited to this configuration. For example, as shown in Fig. 8, the side portions 12, 13 may be formed only of their respective bent portions 12c, 13c.

In this embodiment, an example has been described where the display portion 21a forming the first touch sensor surface, the second touch sensor surface 22a, and the third touch sensor surface 23a are provided separately from each other. However, the present invention is not limited to this configuration. For example, as shown in Fig. 9, the display portion 21a, the second touch sensor surface 22a, and the third touch sensor surface 23a may be integrally provided.

In this embodiment, an example has been described where the cover glass 10 is provided to cover the long side surfaces 22, 23 of the device body 20. However, the present invention is not limited to this configuration. For example, the cover glass may be provided to cover the short side surfaces of the device body.

The cover glass 10 is preferably made of a tempered glass from the viewpoint of enabling it to maintain high strength even if it has a small thickness.

An indication lamp formed of an LED or the like may be further provided inwardly of the side portion 12, 13.

### [Reference Signs List]

- 1: display device
- 10: cover glass
- 11: front portion
- 12: first side portion
- 12b: flat portion
- 12c: bent portion
- 13: second side portion
- 13b: flat portion
- 13c: bent portion
- 20: device body
- 21: first principal surface
- 21a: display portion
- 21a1-21a3: display region
- 22: first side surface
- 22a: second touch sensor surface
- 23: second side surface
- 23a: third touch sensor surface
- 24: third side surface
- 25: fourth side surface
- 26: second principal surface

## Claims

1. A display device comprising:
a device body including a principal surface extending along first and second directions perpendicular to each other, a first side surface located on one side of the principal surface in the first direction, and a second side surface located on the other side of the principal surface in the first direction; and
a cover glass including a front portion covering the principal surface and a first side portion covering the first side surface,
wherein
the device body further includes:
a display portion provided on the principal surface and forming a first touch sensor surface; and
a second touch sensor surface provided on the first side surface, and
at least an outside surface of a junction of the first side portion with the front portion is formed of a curved surface.

2. The display device according to claim 1, allowing a first operation to be input when an object moves from on the front portion to on the first side portion or from on the first side portion to on the front portion while touching the cover glass.

3. The display device according to claim 2, allowing a second operation to be input when an object moves on the first side portion along the second direction while touching the cover glass.

4. The display device according to claim 2 or 3, allowing a third operation to be input when an object touches one region of the first side portion.

5. The display device according to any one of claims 1 to 4, wherein the first touch sensor surface and the second touch sensor surface are continuously provided.

6. The display device according to any one of claims 1 to 5, wherein a magnitude of an angle formed by the front portion and the first side portion is 90degrees or more.

7. The display device according to any one of claims 1 to 6, wherein the cover glass is fixed at the front portion to the device body.

8. The display device according to any one of claims 1 to 7, wherein
the display portion includes a plurality of display regions provided along the second direction, and
each of the plurality of display regions is operable by allowing an object to touch a region of the first side portion located on one side of the display region in the first direction.

9. The display device according to any one of claims 1 to 8, wherein
the device body further includes a third touch sensor surface located on the second side surface,
the cover glass further includes a second side portion covering the second surface, and
at least an outside surface of a junction of the second side portion with the front portion is formed of a curved surface.

10. The display device according to any one of claims 1 to 9, being a mobile display device.
